# EUROPEAN PATENT APPLICATION

(11) **EP 4 549 231 A2**
(43) Date of publication of application: **07.05.2025**
(21) Application number: 25165320.0
(22) Date of filing: 03.09.2021
(51) Int. Cl.: B60L 53/35

(54) **STORAGE SYSTEM**

(30) Priority: 28.09.2020 NO 20201054
(62) Divisional of application: 21773491.2
(71) Applicant: AutoStore Technology AS, 5578 Nedre Vats (NO)
(72) Inventor: AUSTRHEIM, Trond, 5578 Nedre Vats (NO); GJERDEVIK, Øystein, 5578 Nedre Vats (NO)
(74) Representative: Kilburn & Strode LLP

(57) **Abstract**

The present invention provides a storage system comprising at least one container handling vehicle (8), a horizontal rail grid (108) and a charging system for charging a rechargeable power source (9) of the container handling vehicle, wherein the container handling vehicle comprises a vehicle framework (18), a first set of wheels (10a) and a second set of wheels (10b) for moving the container vehicle upon the rail grid in two perpendicular directions; the charging system comprises two separated charge-receiving elements (11) arranged on a sidewall (20) of the container vehicle and connected to the power source (9), and a charging station (12) comprising a support structure (17) and two separated charge-providing elements (13) connected to a power source charger (14), and the charge-receiving elements (11) are arranged to couple with the corresponding charge-providing elements (13) when the container vehicle is moved in a horizontal connection direction (Y') towards and adjacent to the charging station; wherein each of the charge-providing elements (13) and/or each of the charge-receiving elements (11) are resiliently mounted to the support structure (17) or the vehicle framework (18) and configured to allow independent elastic movement of the resiliently mounted charge-providing element and/or charge-receiving element from a neutral position in a direction perpendicular to the connection direction during coupling of the charge-providing and charge-receiving elements.

## Description

### Field of the invention

The present invention relates to a storage system featuring a container handling vehicle and a charging station.

### Background and prior art

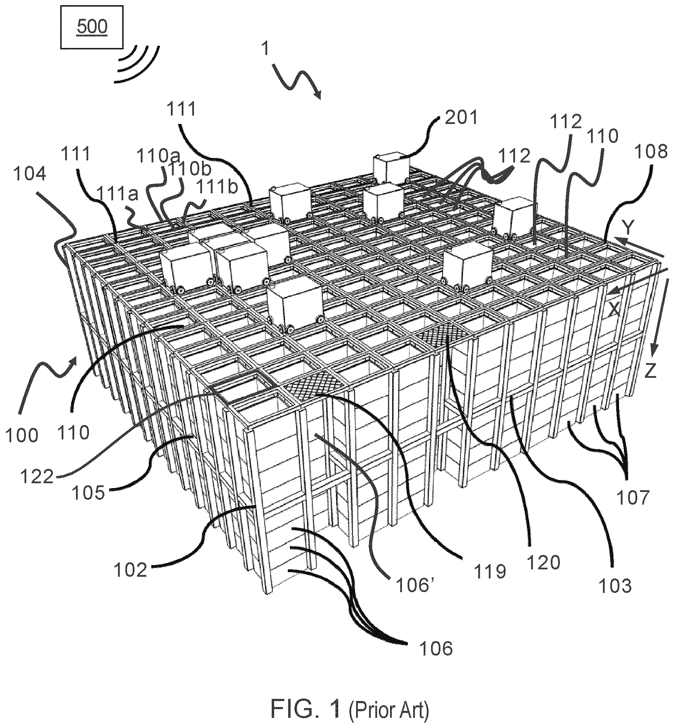

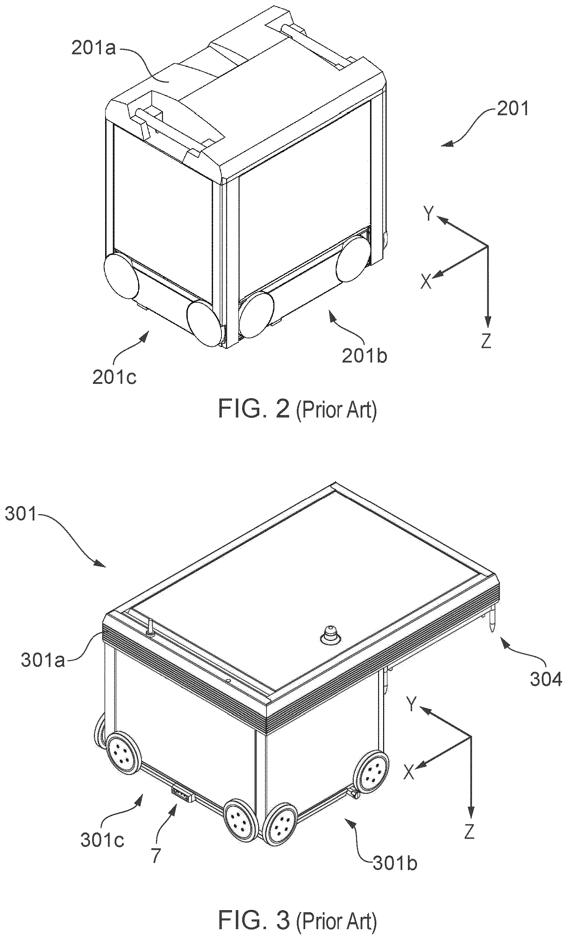

Fig. 1 discloses a typical prior art automated storage and retrieval system 1 with a framework structure 100 and Figs. 2 to 4 disclose two different prior art container handling vehicles 201,301 suitable for operating on such a system 1.

The framework structure 100 comprises upright members 102, horizontal members 103 and a storage volume comprising storage columns 105 arranged in rows between the upright members 102 and the horizontal members 103. In these storage columns 105 storage containers 106, also known as bins, are stacked one on top of one another to form stacks 107. The members 102, 103 may typically be made of metal, e.g. extruded aluminium profiles.

The framework structure 100 of the automated storage and retrieval system 1 comprises a rail system 108 arranged in a grid pattern (i.e. a rail grid) across the top of framework structure 100, on which rail system 108 a plurality of container handling vehicles 201,301 are operated to raise storage containers 106 from, and lower storage containers 106 into, the storage columns 105, and also to transport the storage containers 106 above the storage columns 105. The horizontal extent of one of the grid cells 122 constituting the grid pattern is marked by thick lines.

The rail system 108 (or rail grid) comprises a first set of parallel rails 110 arranged to guide movement of the container handling vehicles 201,301 in a first direction X across the top of the frame structure 100, and a second set of parallel rails 111 arranged perpendicular to the first set of rails 110 to guide movement of the container handling vehicles 201,301 in a second direction Y which is perpendicular to the first direction X. Containers 106 stored in the columns 105 are accessed by the container handling vehicles through access openings 112 in the rail system 108. The container handling vehicles 201,301 can move laterally above the storage columns 105, i.e. in a plane which is parallel to the horizontal X-Y plane. Commonly, at least one of the sets of rails 110,111 is made up of dual-track rails allowing two container handling vehicles to pass each other on neighbouring grid cells 122. Dual-track rails are disclosed in for instance WO 2015/193278 A1 and WO 2015/140216 A1, the contents of which are incorporated herein by reference. The upright members 102 of the framework structure 100 may be used to guide the storage containers during raising of the containers out from and lowering of the containers into the columns 105. The stacks 107 of containers 106 are typically self-supportive.

Each prior art container handling vehicle 201,301 comprises a vehicle body 201a,301a, and first and second sets of wheels 201b,301b,201c,301c which enable the lateral movement of the container handling vehicles 201,301 in the X direction and in the Y direction, respectively. In Fig. 2 and 3 two wheels in each set are fully visible. The first set of wheels 201b,301b is arranged to engage with two adjacent rails of the first set 110 of rails, and the second set of wheels 201c,301c is arranged to engage with two adjacent rails of the second set 111 of rails. At least one of the sets of wheels 201b,301b,201c,301c can be lifted and lowered, so that the first set of wheels 201b,301b and/or the second set of wheels 201c,301c can be engaged with the respective set of rails 110, 111 at any one time.

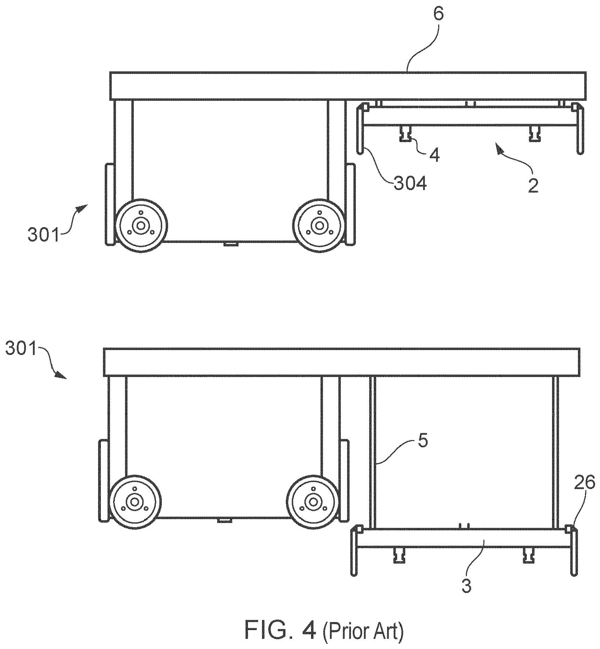

Each prior art container handling vehicle 201,301 also comprises a container lifting assembly 2 (shown in fig. 4) for vertical transportation of storage containers 106, e.g. raising a storage container 106 from, and lowering a storage container 106 into, a storage column 105. The container lifting assembly 2 comprises a lifting frame 3 having one or more gripping/engaging devices 4 adapted to engage a storage container 106 and guide pins 304 for correct positioning of the lifting frame 3 relative to the storage container 106. The lifting frame 3 can be lowered from the vehicle 201,301 by lifting bands 5 so that the position of the lifting frame with respect to the vehicle 201,301 can be adjusted in a third direction Z which is orthogonal the first direction X and the second direction Y.

The lifting frame 3 (not shown) of the container handling vehicle 201 in fig. 2 is located within a cavity of the vehicle body 201a.

Conventionally, and also for the purpose of this application, Z=1 identifies the uppermost layer of storage containers, i.e. the layer immediately below the rail system 108, Z=2 the second layer below the rail system 108, Z=3 the third layer etc. In the exemplary prior art disclosed in Fig. 1, Z=8 identifies the lowermost, bottom layer of storage containers. Similarly, X=1...n and Y=1...n identifies the position of each storage column 105 in the horizontal plane. Consequently, as an example, and using the Cartesian coordinate system X, Y, Z indicated in Fig. 1, the storage container identified as 106' in Fig. 1 can be said to occupy storage position X=10, Y=2, Z=3. The container handling vehicles 201,301 can be said to travel in layer Z=0, and each storage column 105 can be identified by its X and Y coordinates.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y and Z-direction.

Each prior art container handling vehicle 201,301 comprises a storage compartment or space for receiving and stowing a storage container 106 when transporting the storage container 106 across the rail system 108. The storage space may comprise a cavity arranged centrally within the vehicle body 201a as shown in Fig. 2 and as described in e.g. WO2015/193278A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The central cavity container handling vehicles 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the central cavity container handling vehicles 201 may have a footprint which is larger than the lateral area defined by a storage column 105, e.g. as is disclosed in WO2014/090684A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

WO2018146304, the contents of which are incorporated herein by reference, illustrates a typical configuration of rail system 108 comprising rails and parallel tracks in both X and Y directions.

In the framework structure 100, a majority of the columns 105 are storage columns 105, i.e. columns 105 where storage containers 106 are stored in stacks 107. However, some columns 105 may have other purposes. In fig. 1, columns 119 and 120 are such special-purpose columns used by the container handling vehicles 201,301 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In fig. 1, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1 but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles specifically dedicated to the task of temporarily removing storage containers from a storage column 105. Once the target storage container 106 has been removed from the storage column 105, the temporarily removed storage containers can be repositioned into the original storage column 105. However, the removed storage containers may alternatively be relocated to other storage columns.

When a storage container 106 is to be stored in one of the columns 105, one of the container handling vehicles 201,301 is instructed to pick up the storage container 106 from the pick-up port column 120 and transport it to a location above the storage column 105 where it is to be stored. After any storage containers positioned at or above the target position within the storage column stack 107 have been removed, the container handling vehicle 201,301 positions the storage container 106 at the desired position. The removed storage containers may then be lowered back into the storage column 105 or relocated to other storage columns.

For monitoring and controlling the automated storage and retrieval system 1, e.g. monitoring and controlling the location of respective storage containers 106 within the framework structure 100, the content of each storage container 106; and the movement of the container handling vehicles 201,301 so that a desired storage container 106 can be delivered to the desired location at the desired time without the container handling vehicles 201,301 colliding with each other, the automated storage and retrieval system 1 comprises a control system 500 which typically is computerized and which typically comprises a database for keeping track of the storage containers 106.

The prior art container-handling vehicles comprises a rechargeable battery for driving the vehicle and operating the lifting device. The battery of the container-handling vehicle is recharged at a charging station. Commonly, the vehicle and the charging station features a pin and socket interface. A pin 7 for coupling to a socket of a charging station is shown on the prior art container-handling vehicle 301 in fig. 3. The battery of the prior art container-handling vehicle 301 is recharged by moving the vehicle towards the charging station, such that the pin 7 is inserted into a corresponding socket on the charging station. When the battery is charged, the vehicle is moved away from the charging station to disconnect the pin/pin from the socket. During charging the prior art container-handling vehicle 301 and the charging station occupies three adjacent grid cells upon the rail grid 108. Although functioning well, the solution is quite service intensive due to wear caused by minor misalignments between the pin/pin and socket during connection. The misalignments may for instance be caused by small height differences of the rail grid 108.

Further, the wheels of the prior art vehicles do not have brakes, and to keep a container-handling vehicle in close contact with the charging station during charging, the wheels arranged to move in the direction of the charging station are powered to push the vehicle against the charging station. A disadvantage of this solution is that an amount of power is used also during charging.

In view of the above, the aim of the present invention is to provide a storage system having a charging system, and a method for operating such a charging system, that solves or at least mitigates one or more of the problems related to the charging systems of the prior art storage and retrieval systems.

### Summary of the invention

The present invention is defined by the attached claims and in the following:
In a first aspect, the present invention provides a storage system comprising at least one container handling vehicle, a horizontal rail grid and a charging system for charging a rechargeable power source of the container handling vehicle, wherein
   - the container handling vehicle comprises a vehicle framework, a first set of wheels and a second set of wheels for moving the container handling vehicle upon the rail grid in two perpendicular directions;
   - the charging system comprises two separated charge-receiving elements arranged on a sidewall of the container vehicle and connected to the power source, and a charging station comprising a support structure and two separated charge-providing elements connected to a power source charger, and the charge-receiving elements are arranged to couple with the corresponding charge-providing elements when the container vehicle is moved in a horizontal connection direction towards and adjacent to the charging station;
wherein each of the charge-providing elements and/or each of the charge-receiving elements is resiliently mounted to the support structure or the vehicle framework and configured to allow independent elastic movement of the resiliently mounted charge-providing element and/or charge-receiving element from a neutral position in a direction perpendicular to the connection direction during coupling of the charge-providing and charge-receiving elements.

In other words, each of the two resiliently mounted charge-receiving or charge-providing elements may move elastically independent of each other.

The resiliently mounted charge-providing or charge-receiving elements are biased into the neutral position by a resilient assembly.

The elastic movement is relative to any of the sidewall and the support structure.

In an embodiment of the storage system, each of the charge-providing elements is resiliently mounted to the support structure and configured to allow independent elastic movement of the charge-providing element from a neutral position in a direction perpendicular to the connection direction during coupling of the charge-providing and charge-receiving elements.

In an embodiment of the storage system, each of the charge-providing elements is mounted to the support structure via a resilient assembly, the resilient assembly is configured to allow elastic movement of the charge-providing element in a vertical plane being perpendicular to the connection direction.

In an embodiment of the storage system, each of the charge-receiving elements is mounted to the vehicle framework via a resilient assembly, the resilient assembly is configured to allow elastic movement of the charge-receiving element in a vertical plane being perpendicular to the connection direction.

In other words, the vertical plane being perpendicular to the connection direction is a vertical plane perpendicular to one of the two perpendicular directions in which the container handling vehicle may move upon the rail grid. The respective charge-receiving elements or charge-providing elements extend in a direction perpendicular to the vertical plane.

In an embodiment of the storage system, each of the resiliently mounted charge-providing elements and/or each of the resiliently mounted charge-receiving elements has a horizontal centreline, and the horizontal centreline is perpendicular to the vertical plane during the elastic movement of the charge-providing element and/or the charge-receiving element.

In an embodiment of the storage system, each of the two charge-receiving elements and the two charge-providing elements are arranged on opposite sides of a vertical centre plane of the container handling vehicle and the charging station, respectively, the vertical centre plane extending in the connection direction.

In an embodiment of the storage system, the two charge-receiving elements are arranged on opposite sides of a vertical centre plane intersecting the sidewall of the container handling vehicle, and the distance between the two charge-receiving elements is more than a fourth of the width of the sidewall.

In an embodiment of the storage system, the resilient assembly is configured to prevent movement of the charge-providing elements along the connection direction, i.e. the charge-providing elements are fixed relative to the connection direction.

In an embodiment of the storage system, each of the charge-providing elements features a flange, and the resilient assembly comprises a sprung frame that is positioned within a recess in the support structure, the sprung frame being arranged to engage portions of the flange, in order to suspend the charge-providing element, the sprung frame being configured to permit elastic movement of the charge-providing element in the vertical plane.

In an embodiment of the storage system, each of the charge-receiving elements features a flange, and the resilient assembly comprises a sprung frame that is positioned within a recess in the vehicle framework, the sprung frame being arranged to engage portions of the flange, in order to suspend the charge-receiving element, the sprung frame being configured to permit elastic movement of the charge-receiving element in the vertical plane.

In an embodiment of the storage system, each of the charge-providing elements and/or each of the charge-receiving elements may features flange, and may be resiliently mounted via a sprung frame, the sprung frame arranged to engage portions of the flange, in order to suspend the charge-providing element and/or the charge-receiving element, the sprung frame being configured to permit elastic movement of the charge-providing element and/or the charge-receiving element in the vertical plane.

The vertical plane may alternatively be defined as the plane in which the flange is arranged.

In an embodiment of the storage system, the sprung frame comprises a plurality of springs mounted to permit elastic movement of the charge-providing element in at least two perpendicular directions of the vertical plane.

In an embodiment of the storage system, the sprung frame comprises a plurality of springs mounted to permit elastic movement of the charge-receiving element in at least two perpendicular directions of the vertical plane.

In an embodiment of the storage system, each of the charge-providing elements is resiliently mounted to the support structure via a sprung frame, the sprung frame comprising a plurality of springs mounted to permit elastic movement of the charge-providing element in at least two perpendicular directions of the vertical plane.

In an embodiment of the storage system, each of the charge-receiving elements is resiliently mounted to the vehicle framework via a sprung frame, the sprung frame comprising a plurality of springs mounted to permit elastic movement of the charge-providing element in at least two perpendicular directions of the vertical plane.

In an embodiment of the storage system, the plurality of springs may be mounted evenly about a periphery of a flange of the charge-providing element or the charge-receiving element.

In an embodiment of the storage system the sprung frame comprises a plurality of leaf springs arranged as a convex polygon around the flange of the charge-providing element or the charge-receiving element. Each leaf spring may be arranged along a respective side of a convex polygon. The convex polygon may be a regular convex polygon.

In an embodiment of the storage system, the sprung frame may comprise four leaf springs arranged as a square around the flange of the charge-providing element or the charge-receiving element.

In an embodiment of the storage system, the sprung frame may comprise a plurality of coil springs evenly arranged around the flange of the charge-providing element or the charge-receiving element.

In an embodiment of the storage system, the elastic movement in the vertical plane is limited through contact of the springs with a portion of the recess.

In an embodiment of the storage system, the flange is clamped within the recess in the support structure to prevent movement of the flange along the connection direction.

In an embodiment of the storage system, the flange is clamped within the recess in the vehicle framework to prevent movement of the flange along the connection direction.

In an embodiment of the storage system, the recess in the support structure is closed in part by a plate element arranged to retain the resilient assembly within the recess and to prevent movement of the flange along the connection direction. **In** other words, the plate element ensures that the flange may not move in the connection direction as well as the opposite direction, relative to the support structure i.e. the flange may not move in a direction perpendicular to the vertical plane.

In an embodiment of the storage system, the recess in vehicle framework is closed in part by a plate element arranged to retain the resilient assembly within the recess and to prevent movement of the flange along the connection direction. **In** other words, the plate element ensures that the flange may not move in the connection direction as well as the opposite direction, relative to the vehicle framework, i.e. the flange may not move in a direction perpendicular to the vertical plane.

The plate element may be in any suitable form, e.g. depending on the circumference of the recess, such as ring-shaped or square. The plate element may feature a through hole for a connecting end of the charge-providing element or charge-receiving element.

In an embodiment of the storage system the plate element is fixed to the support structure or vehicle framework with removable fasteners, the fasteners allowing the plate element to be removed to facilitate replacement of a charge-providing element or a charge-receiving element.

In an embodiment of the storage system, each of the charge-providing elements comprises a socket or a pin, and each of the charge-receiving elements comprises a corresponding pin or socket, and a centreline of the pin and of the socket is arranged to extend along the connection direction during coupling.

The pin and the socket may be termed a pin electrode and a socket electrode.

In an embodiment of the storage system, the centreline of the pin or socket of the resiliently mounted charge-providing element or the resiliently mounted charge-receiving element extends along the connection direction during the elastic movement.

In an embodiment of the storage system, the resiliently mounted charge-providing element or the resiliently mounted charge-receiving element comprises a pin or a socket having a centreline extending in a direction being perpendicular to the vertical plane during the elastic movement.

In an embodiment of the storage system, a centreline of the pin or the socket of the resiliently mounted charge-providing element or the resiliently mounted charge-receiving element extends in a direction perpendicular to the vertical plane during the elastic movement.

By keeping the centerline of the pin or socket perpendicular to the vertical plane during the elastic movement, mechanical wear of the pin or socket is minimized by avoiding pivotal movement of the pin or socket away from the connection direction during coupling.

In an embodiment of the storage system, the pin is accommodated in a guide sleeve having an open end with a flared portion, the flared portion is configured to guide the accommodated pin into alignment with a corresponding socket during coupling.

In an embodiment of the storage system, the socket is accommodated in a guide sleeve having an open end with a flared portion, the flared portion is configured to guide the accommodated socket into alignment with a corresponding pin during coupling.

In an embodiment of the storage system, the flared portion may be configured to guide the accommodated pin or socket into alignment with a corresponding socket or pin before the accommodated pin or socket is in contact with the corresponding socket or pin.

In an embodiment of the storage system, the flared portion may extend beyond the accommodated pin or socket. In other words, the flared portion may extend beyond a connecting end of the accommodated pin or socket, such that the flared portion may interact with a corresponding socket or pin before the corresponding socket or pin couples with the accommodated pin or socket.

In an embodiment of the storage system, the guide sleeve forms an annular space around the pin or socket, and the corresponding socket or pin is accommodated in a protective sleeve, and the flared portion is configured to guide the protective sleeve into the annular space during coupling.

In an embodiment of the storage system, the guide sleeve and/or the protective sleeve comprises a flange.

In an embodiment, the storage system comprises a framework structure featuring multiple storage columns, in which storage containers may be stored stacked on top of one another in vertical stacks, and the rail grid is arranged at a top level of the framework structure, wherein the container handling vehicle comprises a container lifting assembly and a cantilevered section, the cantilevered section extends laterally from an upper portion of the sidewall at the same side as the charge-receiving elements, the container lifting assembly comprises a lifting frame and a plurality of lifting bands, the lifting frame is for releasable connection to a storage container and is suspended from the cantilevered section by the lifting bands, such that the lifting frame may be raised or lowered relative to the cantilevered section; wherein the lowest level of the lifting frame, when raised in an upper position, is higher than an upper level of the charging station, such that the cantilevered section may be positioned above the charging station during charging of the container handling vehicle.

In an embodiment of the storage system, the rail grid forms a plurality of grid cells, and the container handling vehicle and the charging station occupies an area equal to or less than two adjacent grid cells when the charge-receiving elements are coupled with the corresponding charge-providing elements.

In an embodiment of the storage system, the first set of wheels is displaceable in a vertical direction between a first position, wherein the first set of wheels may move the container vehicle in a first direction, a second position, wherein the first and the second set of wheels are in contact with the rail grid, and a third position wherein the second set of wheels may move the container vehicle in a second direction perpendicular to the first direction.

In a second aspect, the present invention provides a container handling vehicle for a storage system according to the first aspect, the container handling vehicle comprises a vehicle framework, a rechargeable power source and a first set of wheels and a second set of wheels for moving the container vehicle upon a rail grid in two perpendicular directions; wherein two separated charge-receiving elements are arranged on a sidewall of the container vehicle and connected to the power source, wherein each of the charge-receiving elements comprises a pin accommodated in a guide sleeve, the guide sleeve forms an annular space around the pin and has an open end with a flared portion.

The open end of the guide sleeve may face away from the container handling vehicle. The flared portion may have an inner surface having a circumference increasing in the direction in which the open end faces. The pin may have a horizontal centreline.

In an embodiment of the container handling vehicle, the flared portion may extend beyond the accommodated pin. In other words, the flared portion may extend beyond a connecting end of the accommodated pin, such that the flared portion may interact with a corresponding socket of a charging station before the socket couples with the accommodated pin.

In a third aspect, the present invention provides a container handling vehicle for a storage system according to the first aspect, comprising a vehicle framework, a container lifting assembly, a cantilevered section, a rechargeable power source, two separated charge-receiving elements connected to the power source, a first set of wheels and a second set of wheels, wherein
- the first set of wheels and the second set of wheels are for moving the container vehicle upon a rail grid, and the first set of wheels is displaceable in a vertical direction between a first position, wherein the first set of wheels may move the container vehicle in a first direction, a second position, wherein the first and the second set of wheels are in contact with the rail grid, and a third position wherein the second set of wheels may move the container vehicle in a second direction perpendicular to the first direction;
- the rechargeable power source is connected to the two charge-receiving elements;
- the two charge-receiving elements are arranged on a sidewall of the vehicle body;
- the container lifting assembly comprises a lifting frame and a plurality of lifting bands, the lifting frame is for releasable connection to a storage container and is suspended from the cantilevered section by the lifting bands, such that the lifting frame may be raised or lowered relative to the cantilevered section; wherein
the cantilevered section extends laterally from an upper portion of the sidewall at the same side as the charge-receiving elements.

In an embodiment of the third aspect, the lifting frame may be raised or lowered in front of the charge-receiving elements.

The container handling vehicle of the third aspect may comprise any of the features of the container handling vehicle according to the second aspect.

In a fourth aspect, the present invention provides a charging station for a storage system according to the first aspect, the charging station comprises two separated charge-providing elements, a support structure and a power source charger, each of the charge-providing elements comprises a flange and a pin or socket having a horizontal centreline, and is mounted to the support structure via a resilient assembly, the resilient assembly is configured to allow elastic movement of the charge-providing element in a vertical plane being perpendicular to the horizontal centreline.

In other words, the resilient assembly is configured to allow elastic movement of the charge-providing element in a vertical plane during which movement the centerline of the pin or socket is perpendicular to the vertical plane.

In an embodiment of the charging station, each of the charge-providing elements is mounted in a recess of the support structure via the resilient assembly.

In an embodiment of the charging station, the resilient assembly comprises a sprung frame being arranged to engage portions of the flange, in order to suspend the charge-providing element, the sprung frame being configured to allow elastic movement of the charge-providing element in the vertical plane. The sprung frame may be positioned within a recess of the support structure.

In an embodiment of the charging station, the resilient assembly or the sprung frame comprises a plurality of springs mounted to permit elastic movement of the charge-providing element in at least two perpendicular directions of the vertical plane.

In an embodiment of the charging station, the resilient assembly or the sprung frame comprises a plurality of leaf springs arranged as a convex polygon around the flange of the charge-providing element. The convex polygon may be regular.

In an embodiment of the charging station, the resilient assembly or the sprung frame comprises four leaf springs arranged as a square around the flange.

In an embodiment of the charging station, the elastic movement in the vertical plane is limited through contact of the sprung frame with a portion of the recess.

In an embodiment of the charging station, the recess may be closed in part by a plate element arranged to retain the resilient assembly within the recess and to prevent movement of the flange along the direction of the horizontal centreline, the plate element features a through hole for a power source charger connecting end of the charge-providing element.

In an embodiment of the charging station, the plate element may be fixed to the support structure with removable fasteners, the fasteners allowing the plate element to be removed to facilitate replacement of the charge-providing element.

In an embodiment of the charging station the centreline of the pin or socket is perpendicular to the vertical plane during the elastic movement.

In a fifth aspect, the present invention provides a method of charging a container vehicle in a storage system, the storage system comprising a horizontal rail grid and a charging system for charging a rechargeable power source of the container handling vehicle, wherein
the container handling vehicle comprises a vehicle framework, a first set of wheels and a second set of wheels for moving the container vehicle upon the rail grid;
the charging system comprises two separated charge-receiving elements arranged on a sidewall of the container handling vehicle and connected to the power source, and a charging station comprising a support structure and two separated charge-providing elements connected to a power source charger, and the charge-receiving elements are arranged to couple with the corresponding charge-providing elements when the container handling vehicle is moved in a horizontal connection direction towards and adjacent to the charging station;
wherein each of the charge-providing elements are resiliently mounted to the support structure and configured to allow independent elastic movement of the charge-providing element from a neutral position in a direction perpendicular to the connection direction during coupling of the charge-providing elements and the charge-receiving elements; the method comprises the steps of:
   - moving the container handling vehicle in a horizontal direction towards the charging station;
   - allowing independent elastic movement of the charge-providing elements from a neutral position in a direction perpendicular to the horizontal direction during an initial coupling of the charge-providing elements and the charge-receiving elements, such that a centreline of each charge-providing element is arranged collinear with a centreline of the corresponding charge-receiving element; and
   - moving the container handling vehicle further in the horizontal direction towards the charging station until the charge-providing elements and the charge-receiving elements are fully coupled.

In an embodiment of the method according to the fifth aspect, the centreline of each of the charge-providing elements extends in the horizontal direction during the elastic movement. In other words, the centreline of each of the charge-providing elements does not deviate from the horizontal during the elastic movement.

In an embodiment of the method according to the fifth aspect, the first set of wheels is displaceable in a vertical direction between a first position, wherein the first set of wheels may move the container handling vehicle in a first direction, a second position, wherein the first and the second set of wheels are in contact with the rail grid, and a third position wherein the second set of wheels may move the container vehicle in a second direction perpendicular to the first direction; and the method comprises the step of:
- moving the first set of wheels to the second position when the charge-providing elements and the charge-receiving elements are fully coupled, such that the first and the second set of wheels are in contact with the topside of the rail grid and prevents the container handling vehicle from moving upon the rail grid.

In an embodiment of the method according to the fifth aspect, the first set of wheels is displaceable in a vertical direction between a first position, wherein the first set of wheels may move the container handling vehicle in a first direction, a second position, wherein the first and the second set of wheels are in contact with the rail grid, and a third position wherein the second set of wheels may move the container vehicle in a second direction perpendicular to the first direction; and the method comprises the step of:
- moving the first set of wheels to the third position when the charge-providing elements and the charge-receiving elements are fully coupled, such that the first set of wheels are arranged in contact with a sidewall of a rail facing the charging station and prevents the container handling vehicle from moving upon the rail grid.

In a sixth embodiment, the present invention provides a method of charging a container handling vehicle in a storage system, the storage system comprising a horizontal rail grid and a charging system for charging a rechargeable power source of the container handling vehicle, wherein
the container handling vehicle comprises a vehicle framework, a container lifting assembly, a cantilevered section, a rechargeable power source, a first set of wheels and a second set of wheels, wherein
   - the first set of wheels and the second set of wheels are for moving the container vehicle upon a rail grid, and the first set of wheels is displaceable in a vertical direction between a first position, wherein the first set of wheels may move the container vehicle in a first direction, a second position, wherein the first and the second set of wheels are in contact with the rail grid, and a third position wherein the second set of wheels may move the container vehicle in a second direction perpendicular to the first direction;
   - the container lifting assembly comprises a lifting frame and a plurality of lifting bands, the lifting frame is for releasable connection to a storage container and is suspended from the cantilevered section by the lifting bands, such that the lifting frame may be raised or lowered relative to the cantilevered section; and
   - the cantilevered section extends laterally from an upper portion of the sidewall at the same side as the charge-receiving elements; and wherein
the charging system comprises two separated charge-receiving elements on a sidewall of the container handling vehicle, at the same side from which the cantilevered section extends, and connected to the power source, and a charging station comprising a support structure and two separated charge-providing elements connected to a power source charger, and the charge-receiving elements are arranged to couple with the corresponding charge-providing elements when the container handling vehicle is moved in a horizontal connection direction towards and adjacent to the charging station; the method comprising the step of:
   - moving the container handling vehicle in a horizontal direction towards the charging station until the cantilevered section extends above the charging station and the charge-providing elements and the charge-receiving elements are fully coupled.

In a seventh aspect, the present invention provides a method of charging a container vehicle in a storage system, the storage system comprising a horizontal rail grid and a charging system for charging a rechargeable power source of the container handling vehicle, wherein
the container handling vehicle comprises a vehicle framework, a first set of wheels and a second set of wheels for moving the container vehicle upon the rail grid, wherein the first set of wheels is displaceable in a vertical direction between a first position, wherein the first set of wheels may move the container handling vehicle in a first direction, a second position, wherein the first and the second set of wheels are in contact with the rail grid, and a third position wherein the second set of wheels may move the container vehicle in a second direction perpendicular to the first direction;
the charging system comprises charge-receiving elements arranged on a sidewall of the container handling vehicle and connected to the power source, and a charging station comprising a support structure to which charge-providing elements are mounted and connected to a power source charger, and the charge-receiving elements are arranged to couple with the corresponding charge-providing elements when the container handling vehicle is moved in a horizontal connection direction towards and adjacent to the charging station;
the method comprises the steps of:
   - moving the container handling vehicle in the horizontal connection direction towards the charging station until the charge-providing elements and the charge-receiving elements are fully coupled; and
   - moving the first set of wheels to the second position when the charge-providing elements and the charge-receiving elements are fully coupled, such that the first and the second set of wheels are in contact with the topside of the rail grid and prevents the container handling vehicle from moving upon the rail grid; or
   - moving the first set of wheels to the third position when the charge-providing elements and the charge-receiving elements are fully coupled, such that the first set of wheels are arranged in contact with a sidewall of a rail facing the charging station and prevents the container handling vehicle from moving upon the rail grid.

In an embodiment of the seventh aspect, the method comprises an initial step of moving the container handling vehicle in a horizontal direction perpendicular to the horizontal connection direction, i.e. by using the first set of wheels, into a grid cell in front of and adjacent to a grid cell in which the charging station is arranged.

In the seventh aspect of the invention, the container handling vehicle may comprise any of the features of the container handling vehicle disclosed in connection with any of the first to sixth aspect.

In the seventh aspect of the invention, the charging station may comprise any of the features of the charging station disclosed in connection with any of the first to sixth aspect.

In the present specification, the terms charge-receiving element and charge-providing element may alternatively be termed charge-receiving electrode and charge-providing electrode. The two charge-receiving elements may provide a positive and negative terminal for the DC power source. The two charge-providing elements provide a corresponding positive and a negative terminal for the DC power source charger. Alternatively, the charge-providing elements may provide AC current, and the container handling vehicle may feature a converter connected between the charge-receiving elements and the power source, such that the AC current is converted to DC current.

### Brief description of the drawings

Embodiments of the invention is described in detail by reference to the following drawings:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3 is a perspective view of a prior art container handling vehicle having a cantilevered section for carrying storage containers underneath.
Fig. 4 are side views of the container handling vehicle in fig. 3, wherein a lifting device is shown.
Fig. 5 is a perspective side view of an exemplary container handling vehicle and a charging station according to the invention.
Fig. 6 is a perspective side view of the container handling vehicle and charging station in fig. 5 during charging.
Fig. 7 is a cross-sectional top view of the container handling vehicle and charging station in fig. 5 during charging.
Fig. 8 is a cross-sectional top view of the container handling vehicle and charging station in fig. 5 before initial contact between them.
Fig. 9 is a detailed view from fig. 8 showing a charge-providing element and a charge-receiving element.
Fig. 10 is a cross-sectional top view of the container handling vehicle and charging station in fig. 5 during initial contact between them.
Fig. 11 is a cross-sectional top view of the container handling vehicle and charging station in fig. 5 in full contact.
Figs. 12-14 are perspective views showing details of the charge-providing elements of the charging station.
Figs. 15-17 are perspective views of the container handling vehicle and charging station in fig. 5 showing a method of locking the wheels during charging.
Fig. 18 is a side view of two container handling vehicles illustrating the advantages of the method shown in figs. 15-17.
Fig. 19 are perspective views of a sprung frame featuring coil springs.

### Detailed description of the invention

In the following, embodiments of the invention will be discussed in more detail with reference to the appended drawings. However, the drawings are not intended to limit the invention to the subject-matter depicted in the drawings.

The present invention concerns a charging system for remotely operated container handling vehicles. The charging system is particularly suitable for container handling vehicles in an automated storage system featuring at least one rail grid, e.g. a rail system 108 as discussed for the prior art storage system disclosed in fig. 1.

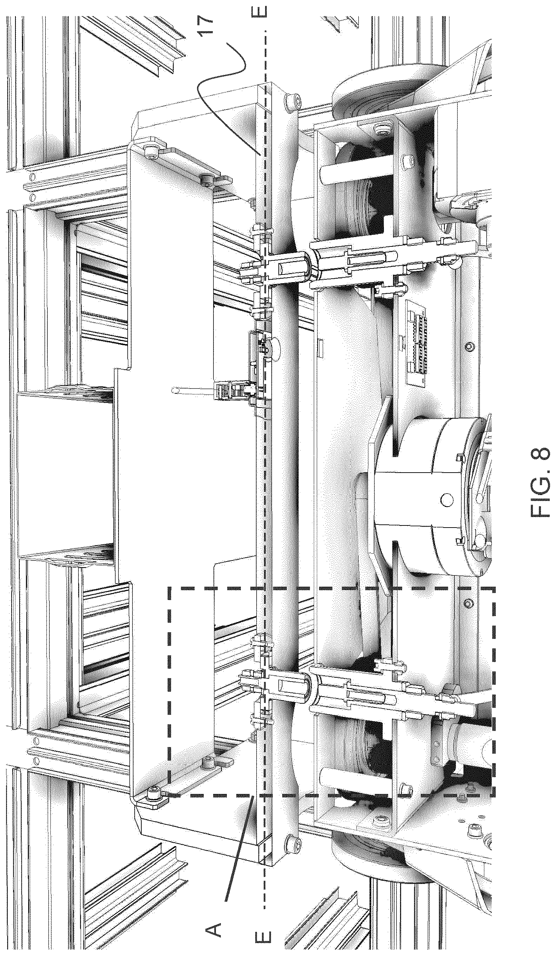

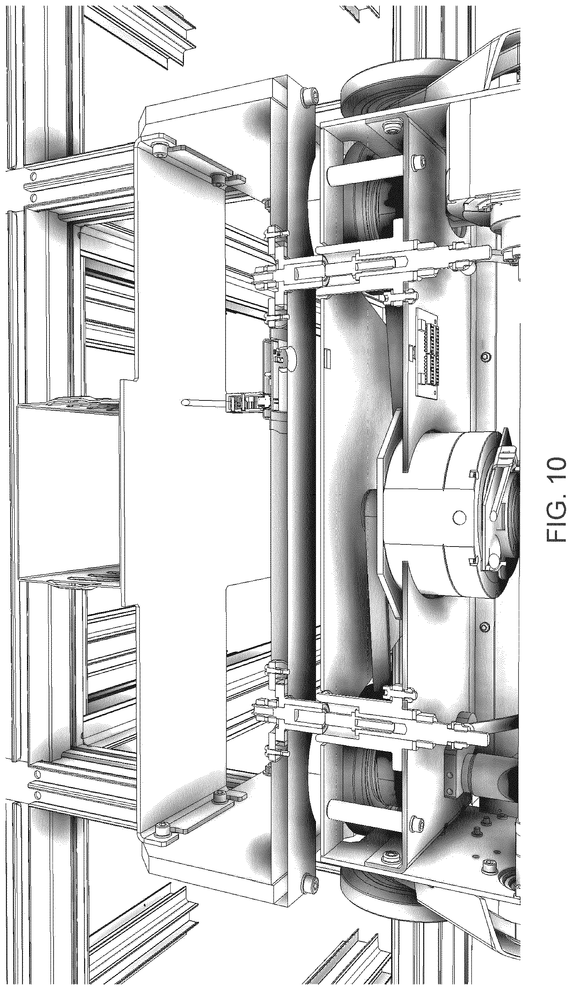

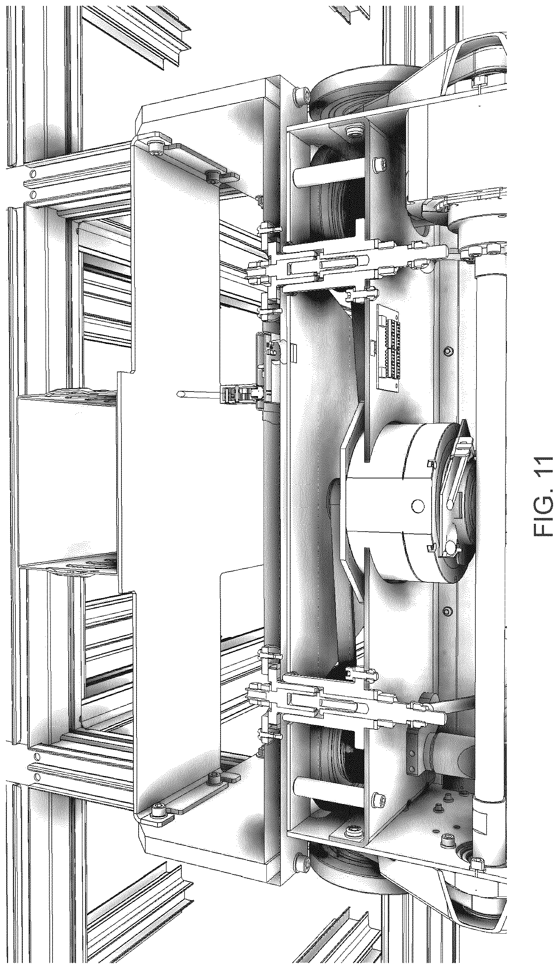

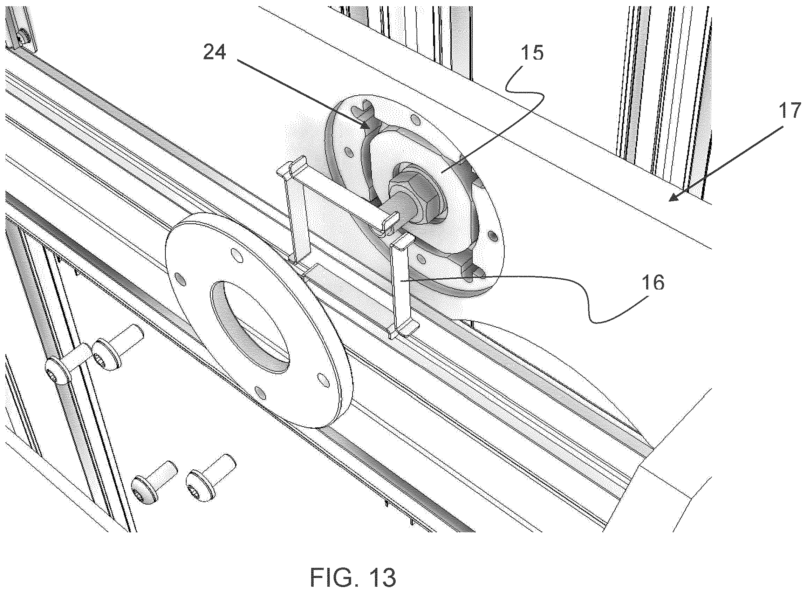

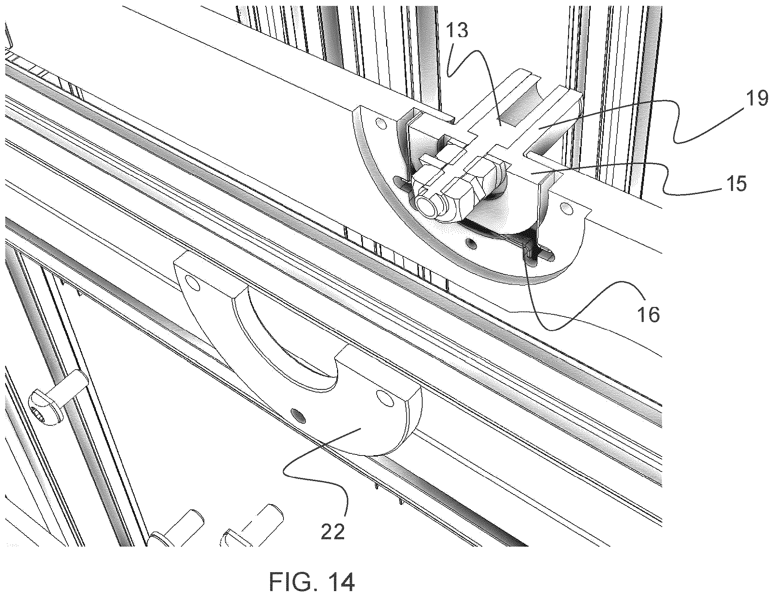

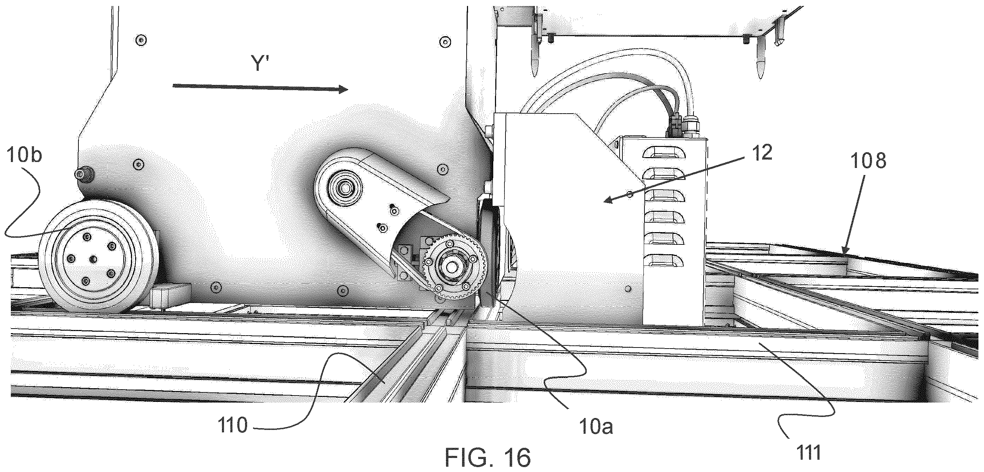

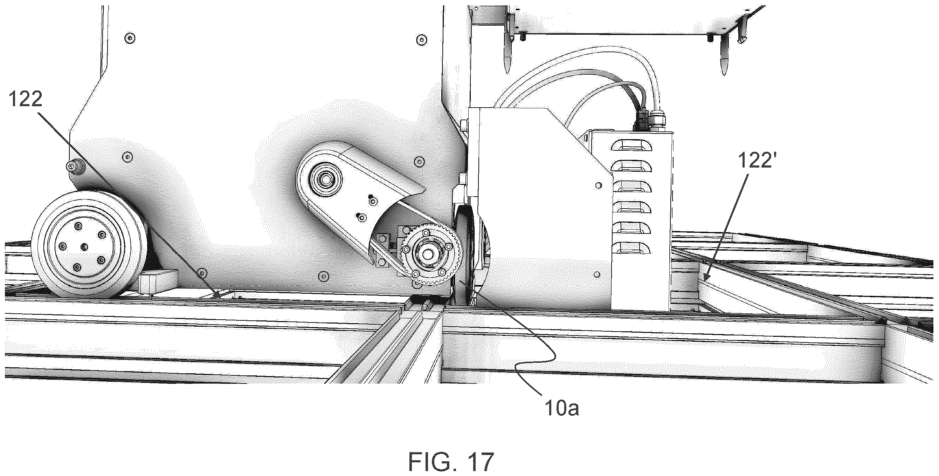

A storage system featuring an exemplary embodiment of a charging system according to the invention is illustrated in figs. 1-17.

The storage system features at least one container handling vehicle 8, more usually a plurality of such container handling vehicles 8, a horizontal rail grid 108 and a charging system for charging a rechargeable power source 9 of the container handling vehicle 8. The rechargeable power source may be any type of suitable battery or supercapacitor.

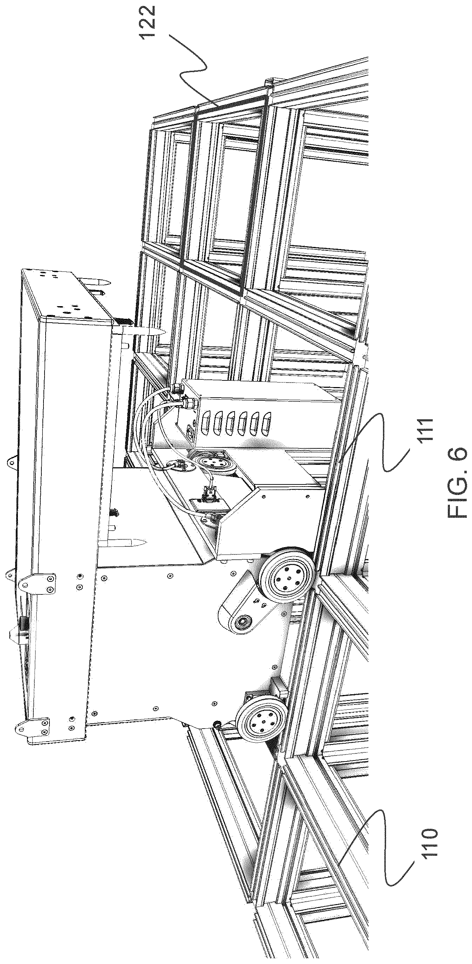

The rail grid is made up of rails 110,111 arranged in two perpendicular directions forming multiple grid cells 122, see fig. 6.

The container handling vehicle 8 comprises a vehicle framework 18, a sidewall 20 and a first set of wheels 10a and a second set of wheels 10b for moving the container handling vehicle upon the rail grid 108 in the rail directions.

The first set of wheels 10a is displaceable in a vertical direction between a first position, wherein the first set of wheels 10a may move the container handling vehicle 8 in a first direction X, a second position, wherein the first and the second set of wheels 10a, 10b are in contact with the rail grid, and a third position wherein the second set of wheels 10b may move the container handling vehicle 8 in a second direction Y perpendicular to the first direction.

The charging system comprises two separated charge-receiving elements 11,25,29 arranged on a sidewall 20 of the container handling vehicle and connected to the power source 9, and a charging station 12 having two separated charge-providing elements 13,19,15 connected to a power source charger 14. The charge-receiving elements provide a positive and a negative terminal of the DC power source 9, while the charge-providing elements provide a corresponding negative and positive terminal of the DC power source charger 14. In other embodiments, the charge-providing elements may provide AC current, and the container handling vehicle features a converter connected between the charge-receiving elements and the power source 9, such that the AC current is converted to DC current.

In this embodiment, each of the charge-receiving elements features a pin 11 and each of the charge-providing elements features a corresponding socket 13. In other embodiments the opposite combination of a pin and socket may be used.

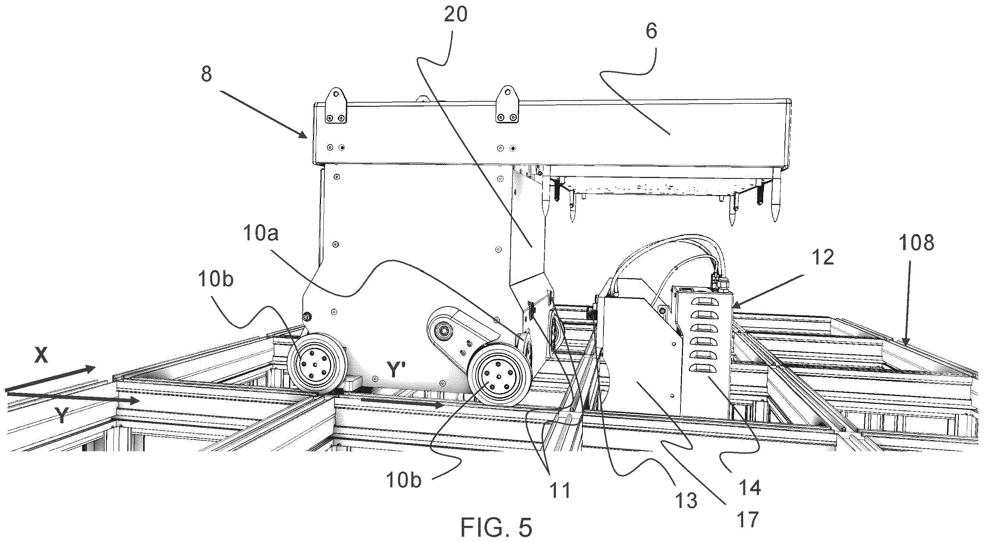

The pins 11 are arranged to couple with the corresponding sockets 13 when the container handling vehicle is moved in a horizontal connection direction Y' towards and adjacent to the charging station 12, see figs. 5-7.

In practice, a rail grid 108 as described above will commonly have small variations in the level of the individual rails 110,111. Such variations may lead to minor misalignments between the pins 11 and sockets 13 during the initial coupling between them and cause premature wear requiring a more frequent replacement of the pins/socket than desired. To minimize the wear, the charging station 12 has a support structure 17 to which the sockets 13 are resiliently mounted. The sockets 13 are configured to allow independent elastic movement of each socket 13 from a neutral position in a direction perpendicular to the connection direction Y' during coupling of the pins 11 and sockets 13. In other words, each of the sockets 13 are allowed elastic movement in a vertical plane being perpendicular to the connection direction Y' while keeping a centreline C of the socket 13 extending in the connection direction Y'. This arrangement optimizes the alignment of the pins 11 and sockets 13 during coupling.

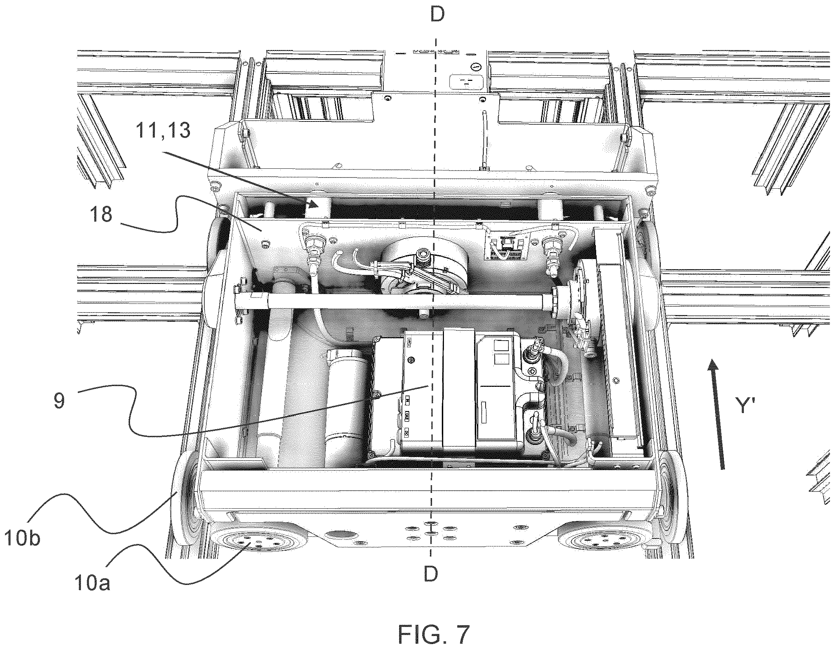

Each of the two charge-receiving elements 11 and the two charge-providing elements 13 are arranged on opposite sides of a vertical centre plane D of the container handling vehicle and the charging station, respectively, see fig. 7. The vertical centre plane D extending in the connection direction Y'. The vertical centre plane D intersects the sidewall 20 of the container handling vehicle. In the embodiment of fig. 7, the distance between the two charge-receiving elements 11 is more than half the width of the sidewall 20. In alternative embodiments, the distance between the two charge-receiving elements 11 is more than a fourth of the width of the sidewall 20. A highly advantageous effect of having the charge-receiving elements 11, and consequently the charge-providing elements 13, separated in this manner is that lateral skewing of the container handling vehicle relative to the connection direction Y' during initial connection to the charging station 12 is minimized. The lateral skewing of the inventive container handling vehicle is minimized since the force required to connect with the charging station is more widely distributed than in prior art solution featuring a single composite connector. Lateral skewing may occur due to limited traction of the wheels 10a,10b allowing the container handling vehicle to move upon the rail grid 108. Minimizing the lateral skewing will ensure a more reliable connection as well as avoid excessive wear of the charge-receiving elements 11 and the charge-providing elements 13.

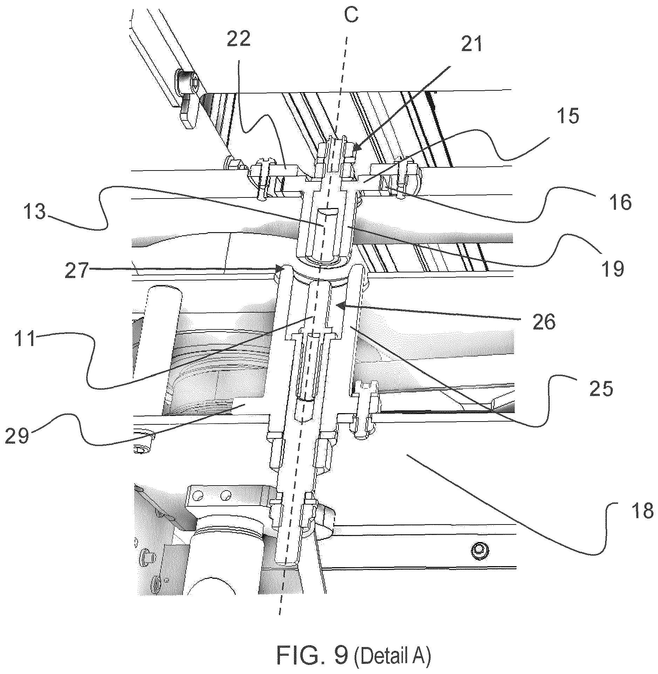

Details of the charge-receiving elements and the charge-providing elements are shown in fig. 9. The socket 13 of the charge-providing element is accommodated in a protective sleeve 19 having a flange 15. A power charger connecting end 21 of the socket 13 is connected to the power source charger 14. The pin 11 of the charge-receiving element is accommodated in a guide sleeve 25 forming an annular space 26 around the pin 11. The guide sleeve 25 has a flange 29, connected to a vehicle framework 18, and an open end with a flared portion 27. The flared portion 27 is configured to guide the protective sleeve 19 and the socket 13 into the annular space 26 during coupling. The guide sleeve 25 steers the protective sleeve 19 and the socket 13 into a correct alignment with the pin 11. The pin 11 and socket 13 are preferably aligned before contact, or at initial contact, to further minimize wear. To obtain alignment before, or at initial contact, the flared portion 27 may advantageously extend beyond the pin 11, such that the protective sleeve 19 interacts with the flared portion before the socket 13 comes into contact with the pin 11.

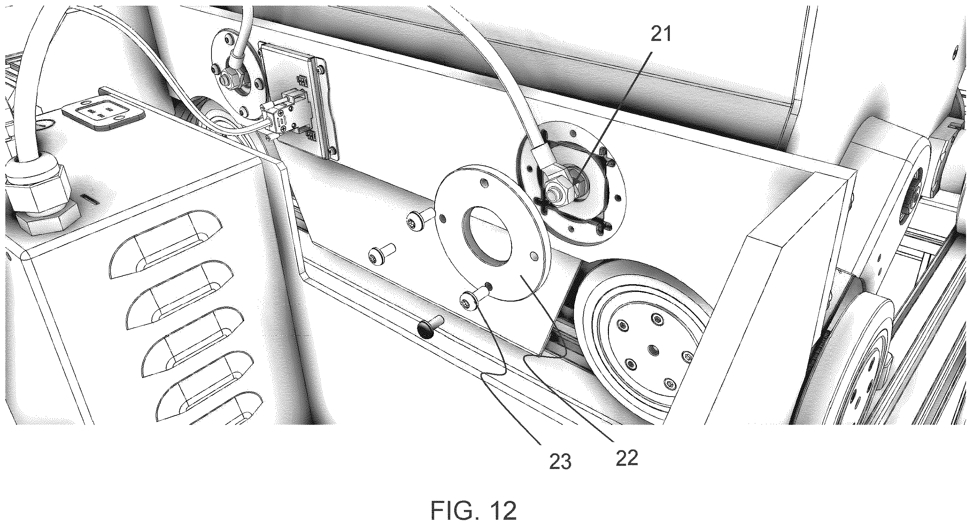

Each of the charge-providing elements is resiliently mounted to the support structure 17 via the flange 15, see figs. 12-14. The flange 15 is suspended within a recess of the support structure 17 by multiple leaf springs 16a (i.e. a resilient assembly) forming a sprung frame. The leaf springs are arranged to engage circumferential portions of the flange 15 to allow elastic movement of the flange 15 and consequently the socket 13 in the vertical plane being perpendicular to the connection direction Y'. In the illustrated embodiment, the sprung frame consists of four leaf springs 16a arranged as a square around the flange. The elastic movement in the vertical plane is limited through contact of the springs 16a with an inner circumference of the recess 24. In other embodiments, the number of leaf springs may be different, e.g. six leaf springs in a hexagonal arrangement, eight leaf springs in an octagonal arrangement etc.

To prevent movement of the flange 15 and socket 13 along the connection direction Y', i.e. horizontal movement relative to the support structure 17, the flange is clamped within the recess 24 by a ring-shaped plate element 22. The plate element features a through hole 28 for a power charger connecting end 21 of the socket 13. The plate element 22 is fixed to the support structure 17 with removable fasteners 23. The fasteners allowing the plate element to be removed to facilitate replacement of a socket 13. In other embodiments, the ring-shaped plate element may be replaced by any element suitable for clamping the flange in place to prevent movement of the flange along the connection direction.

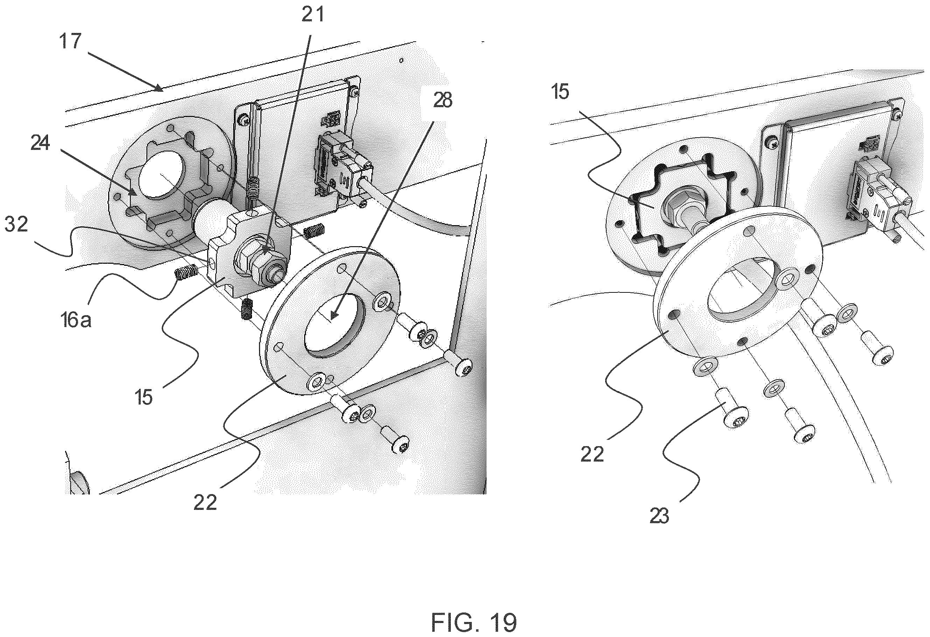

The use of leaf springs provides a simple and reliable sprung frame. However, a suitable sprung frame may be obtained by other spring arrangements. The leaf springs may e.g. be replaced by multiple coil springs or a suitable resilient material arranged around the flange 15. An embodiment of a sprung frame featuring coil springs 16b is shown in fig. 19. The sprung frame features four coil springs 16b, each having one end accommodated in holes 32 arranged on opposite sides of the flange 15.

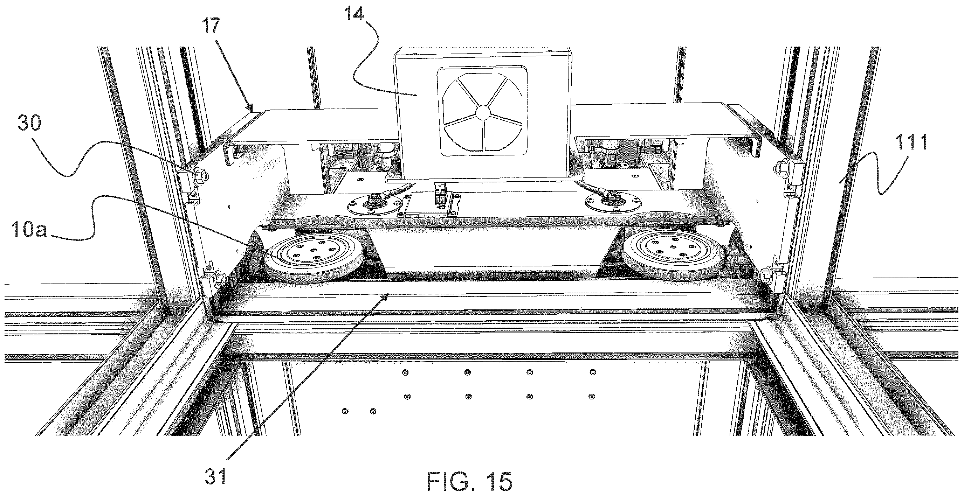

The charging station 12 is sized to be accommodated within a grid cell 122 of the rail grid 108. The charging station 12 is mounted by bolts 30 to the vertical sides of the parallel rails 111 of the grid cell 122 via the support structure 17, see fig. 15.

The exemplary container handling vehicle 8 used to illustrate the present invention features a cantilevered section 6 and a container lifting assembly 2 comprising a lifting frame 3 similar to the container lifting assembly of the prior art container handling vehicle 301 discussed above. In the exemplary container handling vehicle 8, the cantilevered section 6 extends laterally from an upper portion of the sidewall 20 at the same side as the charge-receiving elements 11. The lowest level of the lifting frame 3, when raised in an upper position, is higher than an upper level of the charging station 12. The positioning of the charge-receiving elements 11 allows the cantilevered section 6 to be positioned above the charging station 12 during charging of the container handling vehicle 8. In this manner, the area of the rail grid 108 occupied by a container-handling vehicle and the charging station during charging is minimized, i.e. the occupied area is equal to two grid cells 122 or less.

It is noted that the charging system is suitable for any type of container handling vehicle able to carry or transfer a storage container.

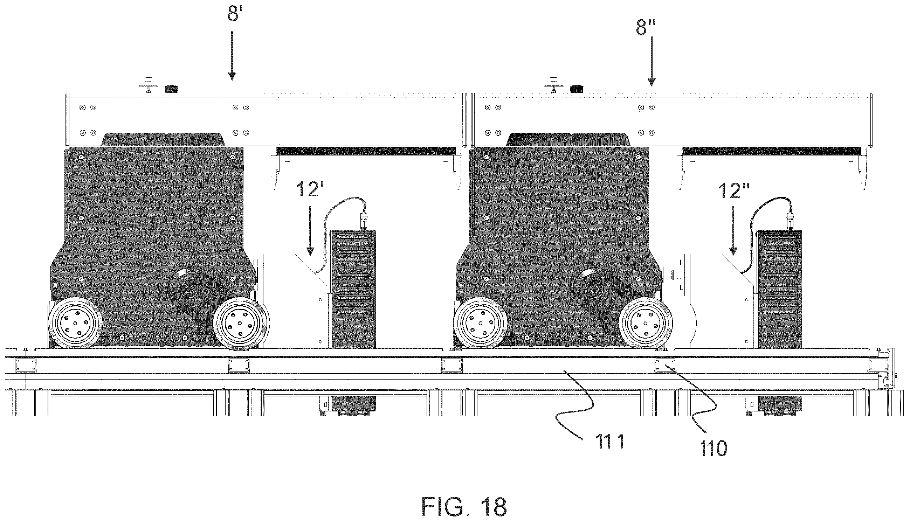

During charging of the container handling vehicle, the vehicle must be kept stationary relative to the charging station 12. A method of locking the container handling vehicle in place while charging is illustrated in figs. 15-17. The method requires the charging station 12 to be positioned in a grid cell 122' such that full coupling between the pin/socket is only obtained when a pair of wheels of the first set of wheels 10a are positioned within the grid cell 122' of the charging station 12. In this method, the container handling vehicle 8 is moved towards the charging station 12 in the connection direction Y' until full coupling is obtained. After coupling, the first set of wheels 10a is moved from the third position to the first position. In the first position, the first set of wheels is in contact with a rail side, or sidewall 31 of a rail 110, facing the charging station 12 and prevents the container handling vehicle 8 from moving away from the charging station 12. By having the charging station 12 arranged such that the charge-providing elements 13 do not extend horizontally beyond the grid cell 122' it is positioned in, a further advantage of the method shown in figs. 15-17 is that the container handling vehicle 8 may enter the grid cell 122 in front of the charging station from a direction perpendicular to the connection direction Y', i.e. the container handling vehicle may move into the grid cell 122 in front of the charging station via the rails 110 arranged perpendicular to the connection direction Y'. This feature allows for a highly compact positioning of the charging station 12. For instance, a plurality of charging stations 12',12" may be arranged at every second grid cell 122' at a side section of the rail grid 108, see fig. 18. In fig. 18, a first container handling vehicle 8' is fully coupled to a first charging station 12'. A second container handling vehicle 8" is arranged in a grid cell in front of a second charging station 12". The second container vehicle may move away from the second charging station via the rails 110 arranged perpendicular to the connection direction Y' or into coupling with the second charging station 12" by moving in the connection direction Y'.

In an alternative method of locking the container handling vehicle in place while charging, the charging station 12 is positioned in a grid cell 122 such that full coupling between the pin/socket is obtained before a pair of wheels of the first set of wheels 10a are positioned within the grid cell 122 of the charging station 12. In the alternative method, the container handling vehicle 8 is moved towards the charging station 12 in the connection direction Y' until full coupling is obtained. After coupling, the first set of wheels 10a is moved from the third position to the second position. In the second position, both the first set of wheels and the second set of wheels are in contact with a topside of the rails of the grid cell adjacent to the grid cell of the charging station 12 and prevent the container handling vehicle from moving away from the charging station.

The charging may be controlled by any suitable control system known to the skilled person, e.g. a control system like any used in the prior art charging stations/systems. Preferably, the control system will ensure that the charge-providing elements supply required current based on the condition of the rechargeable power source. The condition may be based on at least one of voltage, temperature, state of charge, depth of discharge, state of health and current. Signalling between the rechargeable power source 9 and the charging station may advantageously be performed by any suitable wireless transfer or e.g. by an additional pin/socket connection between the container handling vehicle and the charging station.

### Reference numerals:

- 1: Storage system
- 2: Container lifting assembly
- 3: Lifting frame
- 4: Gripping/engaging device
- 5: Lifting band
- 6: Cantilevered section
- 7: Pin, prior art charging solution
- 8: Container handling vehicle
- 9: Rechargeable power source
- 10a: First set of wheels
- 10b: Second set of wheels
- 11: Charge-receiving element, pin, pin electrode
- 12: Charging station
- 13: Charge-providing element, socket, socket electrode
- 14: Power source charger
- 15: Flange
- 16a: Leaf spring
- 16b: Spiral spring
- 17: Support structure of charging station
- 18: Vehicle framework
- 19: Protective sleeve
- 20: Sidewall
- 21: Power charger connecting end of a charge-providing element
- 22: Plate element, ring-shaped plate element
- 23: Removable fastener
- 24: Recess
- 25: Guide sleeve
- 26: Annular space
- 27: Flared portion (of guide sleeve)
- 28: Through hole (of plate element)
- 29: Flange
- 30: Bolt
- 31: Sidewall of rail
- 32: Holes in flange
- 100: Framework structure
- 102: Upright members of framework structure, i.e. vertical column profiles
- 103: Horizontal members of framework structure
- 104: Storage grid, storage grid structure
- 105: Storage column
- 106: Storage container
- 107: Stack
- 108: Rail grid, rail system
- 110: First set of parallel rails in first direction (X), top rails
- 111: Second set of parallel rails in second direction (Y), top rails
- 112: Grid column
- 119: Transfer column,
- 120: Transfer column
- 122: Grid cell
- 201: Prior art container handling vehicle
- 301: Prior art container handling vehicle
- *X*: First direction
- *Y*: Second direction
- *Z*: Third direction
- *Y'*: Connection direction
The disclosure comprises the following items:
1. A storage system comprising at least one container handling vehicle (8), a horizontal rail grid (108) and a charging system for charging a rechargeable power source (9) of the container handling vehicle, wherein
   - the container handling vehicle comprises a vehicle framework (18), a first set of wheels (10a) and a second set of wheels (10b) for moving the container vehicle upon the rail grid in two perpendicular directions;
   - the charging system comprises two separated charge-receiving elements (11) arranged on a sidewall (20) of the container vehicle and connected to the power source (9), and a charging station (12) comprising a support structure (17) and two separated charge-providing elements (13) connected to a power source charger (14), and the charge-receiving elements (11) are arranged to couple with the corresponding charge-providing elements (13) when the container vehicle is moved in a horizontal connection direction (Y') towards and adjacent to the charging station;
   wherein each of the charge-providing elements (13) and/or each of the charge-receiving elements (11) are resiliently mounted to the support structure (17) or the vehicle framework (18) and configured to allow independent elastic movement of the resiliently mounted charge-providing element and/or charge-receiving element from a neutral position in a direction perpendicular to the connection direction during coupling of the charge-providing and charge-receiving elements.
2. A storage system according to item 1, wherein each of the two charge-receiving elements (11) and the two charge-providing elements (13) are arranged on opposite sides of a vertical centre plane (D) of the container handling vehicle (8) and the charging station (12), respectively, the vertical centre plane (D) extending in the connection direction (Y').
3. A storage system according to item 1 or 2, wherein the two charge-receiving elements (11) are arranged on opposite sides of a vertical centre plane (D) intersecting the sidewall (20) of the container handling vehicle, and the distance between the two charge-receiving elements (11) is more than a fourth of the width of the sidewall (20).
4. A storage system according to any of the preceding items, wherein each of the charge-providing elements (13) and/or each of the charge-receiving elements (11) is mounted to the vehicle framework (18) or the support structure (17) via a resilient assembly (16a,16b), the resilient assembly is configured to allow elastic movement of the charge-providing element (13) and/or the charge-receiving element (11) in a vertical plane (E) being perpendicular to the connection direction (Y').
5. A storage system according to item 4, wherein each of the charge-providing elements (13) and/or each of the charge-receiving elements (11) features a flange (15), and the resilient assembly comprises a sprung frame (16a,16b) that is positioned within a recess (24) in the support structure (17) or vehicle framework (18), respectively, the sprung frame being arranged to engage portions of the flange, in order to suspend the charge-providing element (13) and/or the charge-receiving element (11), the sprung frame being configured to permit elastic movement of the charge-providing element (13) and/or the charge-receiving element (11) in the vertical plane (E).
6. A storage system according to item 5, wherein the sprung frame comprises a plurality of springs mounted to permit elastic movement of the charge-providing element (13) and/or the charge-receiving element (11) in at least two perpendicular directions of the vertical plane (E).
7. A storage system according to item 5 or 6, wherein the sprung frame comprises a plurality of leaf springs arranged as a convex polygon around the flange (15) of the charge-providing element (13) or the charge-receiving element (11), or a plurality of coil springs (16b) evenly arranged around the flange (15) of the charge-providing element (13) or the charge-receiving element (11).
8. A storage system according to any of items 5-7, wherein the flange (15) is clamped within the recess (24) in the support structure (17) or vehicle framework (18) to prevent movement of the flange (15) along the connection direction.
9. A storage system according to any of the preceding items, wherein each of the charge-providing elements comprises any of a pin and a socket (13), and each of the charge-receiving elements comprises a corresponding socket or pin (11), and a centreline (C) of the pin and of the socket is arranged to extend along the connection direction (Y') during coupling.
10. A storage system according to item 9, wherein the centreline (C) of the pin (11) or socket (13) of the resiliently mounted charge-providing element or charge-receiving element is perpendicular to the vertical plane (E) and extends along the connection direction (Y') during the elastic movement.
11. A storage system according to item 9 or 10, wherein the pin (11) or socket (13) is accommodated in a guide sleeve (25) having an open end with a flared portion (27), the flared portion (27) configured to guide the accommodated pin (11) or socket into alignment with a corresponding socket (13) or pin during coupling.
12. A storage system according to item 11, wherein the flared portion (27) is configured to guide the accommodated pin (11) or socket into alignment with a corresponding socket (13) or pin before the accommodated pin (11) or socket is in contact with the corresponding socket (13) or pin (11).
13. A storage system according to item 11 or 12, wherein the flared portion (27) extends beyond the accommodated pin (11) or socket.
14. A storage system according to any of items 11-13, wherein the guide sleeve (25) forms an annular space (26) around the pin (11) or socket, and the corresponding socket (13) or pin is accommodated in a protective sleeve (19), and the flared portion (27) is configured to guide the protective sleeve into the annular space (26) during coupling.
15. A storage system according to any of the preceding items, wherein the container handling vehicle (8) comprises a container lifting assembly (3,5) and a cantilevered section (6), wherein
   - the cantilevered section (6) extends laterally from an upper portion of the sidewall (20) at the same side as the charge-receiving elements (11); and
   - the container lifting assembly comprises a lifting frame (3) and a plurality of lifting bands (5), the lifting frame (3) is for releasable connection to a storage container (106) and is suspended from the cantilevered section (6) by the lifting bands (5), such that the lifting frame (3) may be raised or lowered relative to the cantilevered section (6).
16. A storage system according to item 15, wherein the cantilevered section (6) may extend over the charging station during coupling of the charge-providing and charge-receiving elements.
17. A container handling vehicle (8) for a storage system according to any of the preceding claims, the container handling vehicle comprises a vehicle framework (18), a rechargeable power source (9) and a first set of wheels (10a) and a second set of wheels (10b) for moving the container vehicle upon a rail grid in two perpendicular directions;
   the charging system comprises two separated charge-receiving elements (11) arranged on a sidewall (20) of the container vehicle and connected to the power source (9), wherein the two charge-receiving elements (11) are arranged on opposite sides of a vertical centre plane (D) intersecting the sidewall (20), and the distance between the two charge-receiving elements (11) is more than a fourth of the width of the sidewall (20).
18. A container handling vehicle according to item 17, wherein each of the charge-receiving elements comprises a pin (11) accommodated in a guide sleeve (25), the guide sleeve forms an annular space (26) around the pin (11) and has an open end with a flared portion (27).
19. A container vehicle for a storage system according to any of items 1-16, comprising a vehicle framework (18), a container lifting assembly (3,5), a cantilevered section (6), a rechargeable power source (9), two separated charge-receiving elements (11) connected to the power source (9), a first set of wheels (10a) and a second set of wheels (10b), wherein
   - the first set of wheels (10a) and the second set of wheels (10b) are for moving the container vehicle upon a rail grid, and the first set of wheels (10a) is displaceable in a vertical direction between a first position, wherein the first set of wheels may move the container vehicle in a first direction (X), a second position, wherein the first and the second set of wheels are in contact with the rail grid, and a third position wherein the second set of wheels may move the container vehicle in a second direction (Y) perpendicular to the first direction;
   - the rechargeable power source is connected to the two charge-receiving elements (11);
   - the two charge-receiving elements (11) are arranged on a sidewall (20) of the vehicle body;
   - the cantilevered section (6) extends laterally from an upper portion of the sidewall (20) at the same side as the charge-receiving elements (11);
   - the container lifting assembly comprises a lifting frame (3) and a plurality of lifting bands (5), the lifting frame (3) is for releasable connection to a storage container (106) and is suspended from the cantilevered section (6) by the lifting bands (5), such that the lifting frame (3) may be raised or lowered relative to the cantilevered section (6).
20. A charging station for a storage system according to any of items 1-16, comprising two separated charge-providing elements (13), a support structure (17) and a power source charger (14), each of the charge-providing elements comprises a flange (15) and a pin or socket (13) having a horizontal centreline (C), and is mounted in a recess (24) of the support structure (17) via a resilient assembly (16a, 16b), the resilient assembly is configured to allow elastic movement of the charge-providing element (13) in a vertical plane (E) being perpendicular to the horizontal centreline (C).
21. A charging station according to item 20, wherein the two charge-providing elements (13) are arranged on the support structure on opposite sides of a vertical centre plane (D) of the charging station (12), the vertical centre plane (D) being parallel to the horizontal centreline (C).
22. A charging station according to item 21, wherein the distance between the two charge-providing elements (13) is more than a fourth of the width of the support structure (17).
23. A charging station according to any of items 20-22, wherein the resilient assembly comprises a sprung frame (16a, 16b) that is positioned within the recess (24), the sprung frame being arranged to engage portions of the flange (15), in order to suspend the charge-providing element (13), the sprung frame being configured to allow elastic movement of the charge-providing element (13) in the vertical plane.
24. A charging station according to item 23, wherein the sprung frame comprises a plurality of springs (16a, 16b) mounted to permit elastic movement in at least two perpendicular directions of the vertical plane.
25. A charging station according to item 23 or 24, wherein the flange (15) is clamped within the recess (24) in the support structure (17) to prevent movement of the flange (15) along the connection direction.
26. A method of charging a container handling vehicle in a storage system, the storage system comprising a horizontal rail grid (108) and a charging system for charging a rechargeable power source (9) of the container handling vehicle, wherein
   the container handling vehicle comprises a vehicle framework (18), a first set of wheels (10a) and a second set of wheels (10b) for moving the container vehicle upon the rail grid;
   the charging system comprises two separated charge-receiving elements (11) arranged on a sidewall (20) of the container vehicle and connected to the power source (9), and a charging station (12) comprising a support structure (17) and two separated charge-providing elements (13) connected to a power source charger (14), and the charge-receiving elements (11) are arranged to couple with the corresponding charge-providing elements (13) when the container handling vehicle is moved in a horizontal connection direction (Y') towards and adjacent to the charging station;
   wherein each of the charge-providing elements (13) are resiliently mounted to the support structure (17) and configured to allow independent elastic movement of the charge-providing element from a neutral position in a direction perpendicular to the connection direction during coupling of the charge-providing and charge-receiving elements; the method comprises the steps of:
      - moving the container handling vehicle in a horizontal direction (Y') towards the charging station;
      - allowing independent elastic movement of the charge-providing elements from a neutral position in a direction perpendicular to the horizontal direction (Y') during an initial coupling of the charge-providing elements and the charge-receiving elements, such that a centreline (C) of a charge-providing element (13) is arranged collinear with a centreline of a corresponding charge-receiving element (11); and
      - moving the container handling vehicle further in the horizontal direction (Y') towards the charging station until the charge-providing elements and the charge-receiving elements are fully coupled.
27. A method according to item 26, wherein the centreline (C) of the charge-providing elements extends in the horizontal direction (Y') during the elastic movement.
28. A method according to item 26 or 27, wherein the first set of wheels (10a) is displaceable in a vertical direction between a first position, wherein the first set of wheels may move the container handling vehicle in a first direction (X), a second position, wherein the first and the second set of wheels are in contact with the rail grid, and a third position wherein the second set of wheels may move the container vehicle in a second direction (Y) perpendicular to the first direction; and the method comprises the step of:
   - moving the first set of wheels (10a) to the third position when the charge-providing elements (13) and the charge-receiving elements (11) are fully coupled, such that the first set of wheels are arranged in contact with a sidewall of a rail facing the charging station and prevents the container handling vehicle from moving upon the rail grid.

## Claims

1. A storage system comprising at least one container handling vehicle (8), a horizontal rail grid (108) and a charging system for charging a rechargeable power source (9) of the container handling vehicle, wherein
- the container handling vehicle comprises a vehicle framework (18), a first set of wheels (10a) and a second set of wheels (10b) for moving the container vehicle upon the rail grid in two perpendicular directions;
- the charging system comprises two separated charge-receiving elements (11) arranged on a sidewall (20) of the container vehicle and connected to the power source (9), and a charging station (12) comprising a support structure (17) and two separated charge-providing elements (13) connected to a power source charger (14), and the charge-receiving elements (11) are arranged to couple with the corresponding charge-providing elements (13) when the container vehicle is moved in a horizontal connection direction (Y') towards and adjacent to the charging station;
wherein each of the charge-providing elements (13) and/or each of the charge-receiving elements (11) are resiliently mounted to the support structure (17) or the vehicle framework (18) and configured to allow independent elastic movement of the resiliently mounted charge-providing element and/or charge-receiving element from a neutral position in a direction perpendicular to the connection direction during coupling of the charge-providing and charge-receiving elements.

2. A storage system according to claim 1, wherein the two resiliently mounted charge-receiving or charge-providing elements are configured to move elastically independently of each other.

3. A storage system according to claim 1 or claim 2, wherein each of the two charge-receiving elements (11) and the two charge-providing elements (13) are arranged on opposite sides of a vertical centre plane (D) of the container handling vehicle (8) and the charging station (12), respectively, the vertical centre plane (D) extending in the connection direction (Y').

4. A storage system according to any preceding claim, wherein the two charge-receiving elements (11) are arranged on opposite sides of a vertical centre plane (D) intersecting the sidewall (20) of the container handling vehicle, and the distance between the two charge-receiving elements (11) is more than a fourth of the width of the sidewall (20).

5. A storage system according to any preceding claim, wherein each of the charge-providing elements (13) and/or each of the charge-receiving elements (11) is mounted to the vehicle framework (18) or the support structure (17) via a resilient assembly (16a,16b), the resilient assembly is configured to allow elastic movement of the charge-providing element (13) and/or the charge-receiving element (11) in a vertical plane (E) being perpendicular to the connection direction (Y').

6. A storage system according to claim 5, wherein each of the charge-providing elements (13) and/or each of the charge-receiving elements (11) features a flange (15), and the resilient assembly comprises a sprung frame (16a,16b) that is positioned within a recess (24) in the support structure (17) or vehicle framework (18), respectively, the sprung frame being arranged to engage portions of the flange, in order to suspend the charge-providing element (13) and/or the charge-receiving element (11), the sprung frame being configured to permit elastic movement of the charge-providing element (13) and/or the charge-receiving element (11) in the vertical plane (E).

7. A storage system according to claim 6, wherein the sprung frame comprises a plurality of springs mounted to permit elastic movement of the charge-providing element (13) and/or the charge-receiving element (11) in at least two perpendicular directions of the vertical plane (E).

8. A storage system according to claim 6 or 7, wherein the sprung frame comprises a plurality of leaf springs arranged as a convex polygon around the flange (15) of the charge-providing element (13) or the charge-receiving element (11), or a plurality of coil springs (16b) evenly arranged around the flange (15) of the charge-providing element (13) or the charge-receiving element (11), and/or wherein the flange (15) is clamped within the recess (24) in the support structure (17) or vehicle framework (18) to prevent movement of the flange (15) along the connection direction.

9. A storage system according to any preceding claim, wherein each of the charge-providing elements comprises any of a pin and a socket (13), and each of the charge-receiving elements comprises a corresponding socket or pin (11), and a centreline (C) of the pin and of the socket is arranged to extend along the connection direction (Y') during coupling, optionally wherein the centreline (C) of the pin (11) or socket (13) of the resiliently mounted charge-providing element or charge-receiving element is perpendicular to the vertical plane (E) and extends along the connection direction (Y') during the elastic movement.

10. A storage system according to claim 9, wherein the pin (11) or socket (13) is accommodated in a guide sleeve (25) having an open end with a flared portion (27), the flared portion (27) configured to guide the accommodated pin (11) or socket into alignment with a corresponding socket (13) or pin during coupling.

11. A storage system according to claim 10, wherein the flared portion (27) is configured to guide the accommodated pin (11) or socket into alignment with a corresponding socket (13) or pin before the accommodated pin (11) or socket is in contact with the corresponding socket (13) or pin (11), and/or wherein the flared portion (27) extends beyond the accommodated pin (11) or socket, and/or wherein the guide sleeve (25) forms an annular space (26) around the pin (11) or socket, and the corresponding socket (13) or pin is accommodated in a protective sleeve (19), and the flared portion (27) is configured to guide the protective sleeve into the annular space (26) during coupling.

12. A container handling vehicle (8) for a storage system according to any of the preceding claims, the container handling vehicle comprising a vehicle framework (18), a rechargeable power source (9), and a first set of wheels (10a) and a second set of wheels (10b) for moving the container vehicle upon a rail grid in two perpendicular directions;
wherein two separated charge-receiving elements are arranged on a sidewall of the container vehicle and connected to the power source, wherein each of the charge-receiving elements comprises a pin accommodated in a guide sleeve, wherein the guide sleeve forms an annular space around the pin and has an open end with a flared portion.

13. A container handling vehicle according to claim 12, wherein the two separated charge-receiving elements are configured to move elastically independently of each other.

14. A charging station for a storage system according to any of claims 1-11, comprising two separated charge-providing elements (13), a support structure (17) and a power source charger (14), each of the charge-providing elements comprises a flange (15) and a pin or socket (13) having a horizontal centreline (C), and is mounted in a recess (24) of the support structure (17) via a resilient assembly (16a, 16b), the resilient assembly is configured to allow elastic movement of the charge-providing element (13) in a vertical plane (E) being perpendicular to the horizontal centreline (C).

15. A charging station according to claim 14, wherein the two charge-providing elements (13) are configured to move elastically independently of each other.
